Europäisches Patentamt

European Patent Office

Office européen des brevets

(11) Publication number: **0 279 672**
**A1**

(12) # EUROPEAN PATENT APPLICATION

(21) Application number: **88301370.8**

(22) Date of filing: **18.02.88**

(51) Int. Cl.⁴: **C 04 B 35/10**
C 01 F 7/30, C 01 F 7/32,
C 01 F 7/44

(30) Priority: **19.02.87 US 16270**

(43) Date of publication of application:
**24.08.88 Bulletin 88/34**

(84) Designated Contracting States:
**BE DE FR GB IT NL**

(71) Applicant: **Keramont Research Corporation**
**4233 S. Fremont Avenue**
**Tucson Arizona 85714 (US)**

(72) Inventor: **Loutfy, Raouf O.**
**4660 N Via Madre**
**Tucson Arizona 85749 (US)**

**Sepulveda, Juan L.**
**7735 E. Knollwood Terrace**
**Tucson Arizona 85715 (US)**

**Withers, James C.**
**720 N. Kolb Road**
**5, Tucson, Arizona 85710 (US)**

(74) Representative: **Whalley, Kevin et al**
**MARKS & CLERK 57/60 Lincoln's Inn Fields**
**London WC2A 3LS (GB)**

(54) **Process for obtaining alpha-alumina powders.**

(57) A process for obtaining alpha-alumina in powder form having a particle median size distribution $D_{50}$ from 0.1 to 1 micron and having coarse particles larger than 3 microns being less than 2% comprises subjecting solid powder of hydrated $Al_2O_3$, or hydrated aluminium chloride or sulphate, to a calcination treatment to transform it to alpha-phase alumina and to obtain a powder having a surface area from 2 to 12 $m^2/g$; and grinding the powder.

EP 0 279 672 A1

**Description**

"PROCESS FOR OBTAINING ALPHA-ALUMINA POWDERS"

The present invention relates to a process for preparing alpha alumina powder, more particularly it refers to a process for preparing alpha-alumina having a particle average size distribution $D_{50}$, ranging from 0.1 to 1.0 micron; and containing coarse particles having a diameter greater than 3 microns in amounts of less than 2%.

As is known alumina is used in a wide range of applications, for example in the fields of ceramic and synthetic sapphire, catalysts.

Another application is in the field of magnetic recording media as an abrasive.

For particular applications it is necessary to have alumina with a low content of impurities and with a particle average size distribution $D_{50}$ of between 0.1 and 1 micron and containing coarse particles having a diameter greater than 3 microns in an amount less than 2%. The meaning of particle median size distribution $D_{50}$ is described in "Particle size Measurement" by Terence Allen, (Chapman & Hall London Publisher, 1975).

Many processes are well known in the art for preparing $Al_2O_3$ for use as abrasive or for other applications. In general however they have the disadvantage to bring to alumina not having the characteristics indicated above, they are obtained by using very expensive processes which require a long time.

A process for obtaining alpha-alumina from boehmite is described in U.S.P. 3.108.888.

The process starts with alumina monohydrate having colloidal and anisodiametric particles which is heated at a temperature in the range of 300°C to 1000°C until at least a portion of the boehmite has been converted into a transition alumina phase, and then it is further heated at a temperature above the sintering temperature and below the melting point, until substantially all the boehmite and transition alumina has been converted to alpha-alumina.

With this process alpha-alumina having average size about 10 microns is obtained.

In E.P. application 200.487 it is described a sol gel process of producing alpha-alumina based ceramic abrasive grain characterized by the following steps:
- preparing a dispersion of alpha aluminum oxide mono hydrate;
- gelling the dispersion;
- drying the gelled dispersion;
- calcining the solid;
- sintering the solid.

Even if products of this reference have domains having an average diameter less than 5 microns, more frequently less than about 2 microns, however the process require gelling step.

Another process for preparing abrasive grains is described in U.K. patent application 2.099.012 and comprises:
- preparing a dispersion from aluminum oxide monohydrate, containing a sintering aid;
- gelling said dispersion;
- drying the gelled dispersion at a temperature below the frothing temperature of the gel, to vaporize free water;
- crushing the dried solid to form grains;
- rapidly heating the grains to above about 1200°C in less than 10 minutes;
- continuing to heat at a sintering temperature between about 1200°C and about 1650°C.

In addition to the complexity gelling of this process, the alpha-alumina grains obtained have a diameter from about 5 to 20 microns.

Experimental work carried out has revealed that in order to get $Al_2O_3$ powder with the characteristics indicated above, all of these processes require further treatments which need a long time and involve very complicated operations.

In any case, even when it is possible, in general it is difficult to obtain $Al_2O_3$ having the desired features by using the processes indicated above.

For example if one starts by forming gel of $Al_2O_3$ it is not possible to prepare the alpha-alumina powder having the features previously cited.

The present invention is a process for obtaining alpha-alumina powder having particle median size distribution $D_{50}$ comprised between 0.1 and 1 micron and having no coarse particles greater than 3 microns.

It has unexpectedly been found that grinding alpha-alumina having a particular surface area, it is possible to obtain the above indicated features.

The process according to the present invention comprises:

a) subjecting solid powder of hydrated $Al_2O_3$, or solid hydrated powder of aluminum salts, to a calcination treatment to transform it into alpha-alumina powder under condition for obtaining a surface area comprised between 2 and 12 $m^2/g$, then

b) grinding the alpha-alumina powder.

This particular surface area range is very critical in order to get the powder with the diameter above mentioned (D 50 from 0.1 to 1.0 milions and particles greater than 3 microns in amounts less then 2%) with very short grinding time. The Applicant has found out that alpha-alumina powder having lower surface area less than 2 $m^2/g$, has particles very hard and difficult to be ground; whether alumina powder has a surface area value higher than 12 $m^2/g$, even in this case it is also very difficult to grind the powder.

The starting hydrated $Al_2O_3$ powder which may be used, according to the present invention, may be prepared by any process known in the art. For example useful alumina powders are: $Al_2O_3.H_2O$, $Al_2O_3.6H_2O$, $Al_2O_3.3H_2O$.

Particularly good results were achieved by using boehmite $Al_2O_3.H_2O$, for example the commerical product sold by Vista Chem as CATAPAL ® can be used.

Suitable solid hydrated aluminum salts include: $AlCl_3.6H_2O$ $Al_2(SO_4)_3.18H_2O$.

In order to achieve surface area range indicated above, a useful process involves subjecting the starting hydrated $Al_2O_3$ or aluminum salts indicated above to a temperature sufficient to transform the starting material to alpha-phase $Al_2O_3$ and for a time sufficient to have the surface area desired. In general the time range varies depending on the temperature of the calcination treatment. Anyone skilled in the art can easily determine suitable combination of temperature and time.

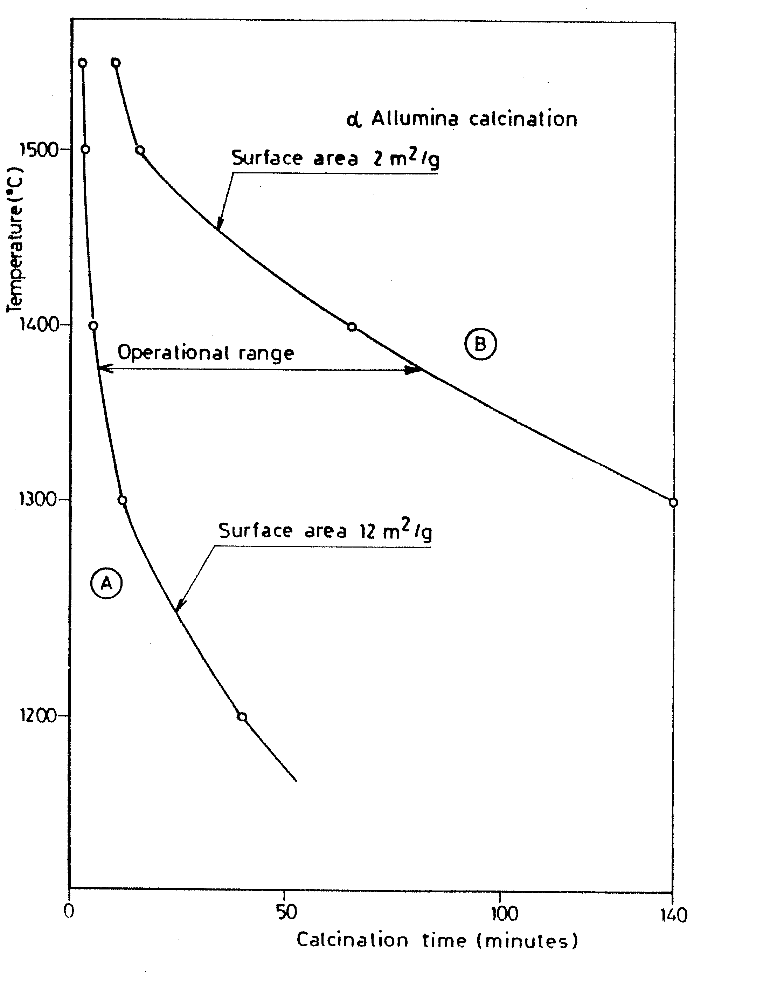

For example by using as a starting material boehmite the relationship between calcination temperature and operating time range is shown in fig. 1, wherein the curves A and B represent the time-temperature conditions for obtaining, respectively, calcined products having the upper limit of surface area of the present invention, i.e., 12 $m^2/g$, and the lower limit, i.e., 2 $m^2/g$. The time-temperature conditions useful for obtaining the products of the present invention are comprised between the curves A and B, and anyone skilled in the art may choose the appropriate time and temperature of calcination to get a product having a desired surface area in the range of the invention.

For example starting with boehmite at 1300°C the operational time is between 15 and about 150 minutes; at 1400°C the time range is 4-64 minutes (see fig. 1).

Generally the calcination is carried out at 1200°C for a time between 50 and 60 minutes; or also by calcining at 1250°C for 60 minutes.

The alpha crystalline phase of alumina is determined by means of the X Ray diffraction pattern of the powders according to JPCDS No 10-173. Specific surface area is determined according to the dynamic BET method with nitrogen.

The grinding can be carried out in any kind of mill for the time sufficient to get the average diameter indicated above.

In general the grinding time ranges from 4 to 26 hours but preferably from 8 to 24 hours and the ball load generally consists of alumina or zirconia balls or alumina cylinders.

The grinding can be a dry ball milling or a wet milling. The dry ball milling can also be carried out in the presence of additives as grinding aid, e.g. triethanolamine in an amount of 0.2-0.3 percent by weight.

In a preferred embodiment the grinding step is a wet milling. The calcined alumina is charged with water in an amount between 50-75% by weight with respect to the alpha alumina charged.

The following examples are given to only for the purposes of illustrating the invention and are not intended to be limitative thereof.

## Example 1

Two kilos of Catapal B® boehmite, having the following properties: surface area: 260 $m^2/g$, median size $D_{50}$ : 65 microns, coarse particles 90 microns: 15% by weight, coarse particles 45 microns: 45% by weight, were placed in an alumina sagger (boat) and introduced to a furnace at room temperature. Temperature was ramped up to 300°C in about 30 min. and was held at 300°C until no more steam was released from the boehmite. This procedure took one hour, then the temperature was raised to 600°C during the next 30 minutes and maintained at the same value for another 30 minutes to eliminate the last traces of moisture, then it was elevated to 1200°C during the next 90 minutes. After reaching 1200°C, the temperature was maintained for one hour. At the end, power to the furnace was turned off and it was allowed to cool.

A calcined alumina so obtained in alpha form shows a specific surface area of 6 $m^2/g$ and a median size $D_{50}$ : 4.31 microns.

800 g of calcined alumina was introduced to a dry ball mill of 1.5 gallon having a speed of 54 RPM loaded with 5630 g of 1 3/16-1/2" alumina cylinders, together with triethanolamine (TEA), in an amount of 0.2% as grinding aid. The mill was set to tumble and samples were withdrawn after different grinding times. All samples were analyzed for size using light absorption sedimentation techniques. After 24 hours, a product with a median size of 0.52 microns was obtained and coarse particles larger than 3 microns were absent.

## Example 1A (comparison vs Ex. 1)

The same procedure of Example 1 was followed and the same quantity of starting material "CATAPAL B® was followed but the temperature was raised to 1100°C and held for 1.25 hours.

Alpha-alumina having surface area: 116 $m^2/g$ was achieved.

700 g of the calcined alumina was introduced to the mill described of Example 1 and together with TEA in concentration of 0.2% by weight as grinding aid. The mill was set to tumble and samples were withdrawn after different grinding times. All samples were analyzed for size using light absorption sedimentation techniques. Although the material has high surface area, no packing was observed. After 24 hours, a product with a median size of 1.88 microns was obtained, particles greater than 3 micron being present in an amount of 32%.

## Example 1B. (Comparison vs Ex. 1)

800 g of boehmite (CATAPAL ®B of example 1) having surface area of 260 $m^2/g$ were introduced to the dry ball mill of example 1 together with 1 3/16-1/2" alumina cylinders and with TEA in an amount of 0.15% by weight as grinding aid. The mill was set to tumble and samples were withdrawn after different grinding times and analyzed for size using light absorption sedimentation techniques. After 24 hours a product with a median size of 3.59 microns was obtained and particles greater than 3 microns were present in an amount of 60% by weight.

## Example 1C. (Comparative example vs 1)

1000 g of CATAPAL-B boehmite were mixed with 1500 g of distilled water and gradually 500 ml of 8% by weight $HNO_3$ solution were added. Then the mixture was heated to 70°C under stirring until all the alumina was dissolved. The gel was removed and placed in a tray to dry overnight in an oven at 100°C. Then the gel was calcined at 1200°C for one hour to convert it to alpha-alumina.

850 g of the calcined product was introduced to the dry ball mill of example 1 together with 13/16-1/2" alumina cylinders and with TEA in an amount of 0.15% by weight as grinding aid. The mill was set to tumble and samples withdrawn after different grinding times were analyzed for size using light absorption sedimentation techniques.

After 24 hours a product having a median size distribution of 1.47 microns was obtained, and particles greater than 3 microns were present in an amount of 17% by weight.

## Example 2

The same procedure and the same quantity of the starting boehmite as Example 1 was practiced, in this case the temperature was raised to 1250°C and held for 2.25 hours. Alpha-alumina was obtained and having a surface area of 4.2 m²/g.

800 g of the obtained calcined alumina was introduced to the mill described in Example 1 with TEA in an amount of 0.2%, as grinding aid. The mill was set to tumble and samples were withdrawn after different grinding times. All samples were analyzed for size using light absorption sedimentation techniques. After 24 hours, a product with a median size of 0.44 microns was obtained and coarse particles larger than 3 microns were absent.

## Example 3

The same procedure of Example 1 with a box type furnace was practiced. A sufficient amount of Catapal B was calcined. The temperature was raised to 1200°C and held for 1 hours.

Alpha-alumina powder having a surface area 6 m²/g was obtained.

24 Kg of the calcined alumina were introduced to a 52 gallon dry ball mill having a speed of 28.8 RPM loaded with 170.6 Kg of 1 3/16-1/2" alumina cylinders together with TEA in a concentration of 0.2% by weight as grinding aid. The mill was set to tumble and samples were withdrawn after different grinding times. All samples were analyzed for size using light absorption sedimentation techniques. After 24 hours, a product with a median size of 0.44 microns was obtained, and coarse particles greater than 3 microns were absent.

## Example 4

Using the same procedure of Example 1 with a box type furnace, a sufficient amount of Catapal B was calcined. The temperature was raised to 1200°C and held for 1 hour.

Alpha-alumina having a surface area of 6 m²/g was obtained.

17 Kg of calcined alumina was introduced to the dry ball mill described in Example 3 loaded with alumina cylinders together with TEA in an amount of 0.2% by weight as grinding aid. The mill was set to tumble and samples were withdrawn after different grinding times. All samples were analyzed for size using light absorption sedimentation techniques. After 23 hours, a product with a median size of 0.44 microns was obtained, and coarse particles greater than 3 microns being.

## Example 5

Using the same procedure of Example 1 with a box type furnace, a sufficient amount of Catapal B was calcined. The temperature was raised to 1200°C and held for 50 minutes.

Alpha-alumina having surface area of 9.6 m²/g was obtained.

17 Kg. of the calcined alumina was introduced to the dry ball mill described in Example 3 together with TEA in a concentration of 0.2% as grinding aid. The mill was set to tumble and samples were withdrawn after different grinding times. All samples were analyzed for size using light absorption sedimentation techniques. After 23 hours, a product with a median size of 0.50 microns was obtained and coarse particle greater than 3 microns were absent.

## Example 6

Using the same procedure of Example 1 with a box type furnace, a sufficient amount of Catapal B was calcined. The temperature was raised to 1250°C and held for 2.25 hours.

Alpha-alumina having a surface area of 4.7 m²/g was obtained.

17 Kg of the calcined alumina was introduced to the dry ball mill described in Example 3 together with TEA in an amount of 0.2% by weight as grinding aid. The mill was set to tumble and samples were withdrawn after different grinding times. All samples were analyzed for size using light absorption sedimentation techniques. After 23 hours, a product with a median size of 0.43 microns was obtained and coarse particle greater than 3 microns were absent.

## Example 7

Using the same procedure of Example 1 and the same quantity of starting material, the temperature was raised to 1200°C and held for about 55 minutes.

Alpha-alumina having a surface area 7.2 m²/g was obtained.

341.6 g of the calcined alumina and 1046.8 g of water (25% solid particles by weight) were introduced into a 1.5 gallon wet sand mill having a speed of 54 RPM loaded with 7,400 g of 1/4" zirconia ball. The mill was set to tumble and samples were withdrawn after different grinding times. All samples were analyzed for size using light absorption sedimentation techniques. After 24 hours, a product with a median size of 0.25 microns was obtained and coarse particles greater than 3 microns were absent.

## Example 8

Using the same procedure of Example 1, the temperature was raised to 1200°C and held for 60 minutes.

Alpha-alumina powder having surface area of 6 m²/g was obtained.

683.2 g of the calcined alumina and 683.2 g of water in (50% solid particles by weight) were introduced to the mill, described in Example 7. The mill was set to tumble and samples were withdrawn after different grinding times. All samples were analyzed for size using light absorption sedimentation techniques. After 24 hours, a product with a median size of 0.28 microns was obtained having no coarse particles greater than 3 microns.

## Example 9

Using the same procedure of Example 1, the temperature was raised to 1200°C and held for 60 minutes.

Alpha-alumina having a surface area of 6 $m^2/g$ was obtained.

306.6 g of the calcined alumina and 919.7g of water (25% of solid particles) were introduced to a 1.5 gallon wet sand mill having a speed of 54 RPM loaded with 8595 g of 1.5 mm zirconia balls. The mill was set to tumble and samples were withdrawn after different grinding times. All samples were analyzed for size using light absorption sedimentation techniques. After 24 hours, a product with a median size of 0.23 microns was obtained. The particle size was less than 1.0 micron for almost 100% of the product.

## Example 10

A sufficient amount of CATAPAL ® B was calcined at 1400°C for 18 minutes. Alpha alumina having a surface area of 4.8 $m^2/g$ was obtained.

800 g of calcined alumina were introduced to the dry ball mill of example 1 together with 1 3/16-1/2" alumina cylinders and TEA in an amount of 0.15% by weight as grinding aid. The mill was set to tumble and samples withdrawn after different grinding time were analyzed for size using light absorption sedimentation technique. After 24 hours a product with a median size of 0.43 microns was obtained, coarse particles greater than 3 microns were absent.

## Example 10A (Comparison vs Example 10)

A sufficient amount of CATAPAL ® B was calcined at 1420°C for 19 hours. Alpha alumina having surface area 0.3 $m^2/g$ was obtained.

800 g of the same calcined alumina were introduced to the dry ball mill of Example 1 together with 1 3/16-1/2" alumina cylinders and TEA in an amount of 0.2% by weight as grinding aid. The mill was set to tumble and samples were analyzed for size using light absorption sedimentation technique.

After 24 hours a product with a median size of 2.98 microns was obtained and coarse particles greater than 3 microns were present in an amount of 50% by weight.

## Example 11

A sufficient amount of $Al_2O_3.3H_2O$ was calcined at 1200°C for 3 hours and 20 minutes. Alpha alumina having surface area 6 $m^2/g$ was obtained.

800 g of the calcined alumina so obtained was introduced to the dry ball mill of example 1 together with 1 3/16-1/2" alumina cylinders and TEA in an amount of 0.2% by weight as grinding aid.

The mill was set to tumble and samples withdrawn after different grinding time were analyzed for size using light absorption sedimentation technique. After 24 hours a product with a median size distribution of 0.41 microns was obtained, coarse particle greater than 3 microns being absent.

## Example 12

A sufficient amount of $AlCl_3.6H_2O$ was calcined at 1250°C for 1 hour. Alpha alumina having surface area 5.3 $m^2/g$ was obtained.

800 g of the same calcined alumina was introduced to the dry ball mill of example 1 together with 1 3/16-1/2" alumina cylinders and TEA in an amount of 0.2% by weight as grinding aid.

The mill was set to tumble and samples withdrawn after different grinding time were analyzed for size using light absorption sedimentation technique. A product with a median size of 0.48 microns was obtained, coarse particles greater than 3 microns were absent.

## Claims

1. A process for obtaining alpha-alumina in powder form having a particle median size distribution $D_{50}$ from 0.1 to 1 micron and having coarse particles larger than 3 microns, characterized by comprising:

a) calcining solid powder of hydrated $Al_2O_3$, or hydrated aluminium chloride or sulphate, to form alpha-phase alumina and having a surface area comprised from 2 to 12 $m^2/g$; and

b) grinding the alpha phase alumina for a time sufficient to obtain said alpha alumina in powder form.

2. A process as claimed in claim 1, characterized in that said calcination is carried out at temperatures of 1200 to 1400°C for 4 to 150 minutes.

3. A process as claimed in claim 2, characterized in that said calcination is carried out at 1200°C for from 50 to 60 minutes.

4. A process as claimed in claim 2, characterized in that said calcination is carried out at 1250°C for 1 hour.

5. A process as claimed in any of claims 1 to 4, characterized in that said solid powder is $Al_2O_3.1H_2O$.

6. A process as claimed in any of claims 1 to 4, characterized in that said solid powder is $Al_2O_3.3H_2O$.

7. A process as claims in any of claims 1 to 4, characterized in that said solid powder is $AlCl_3.6H_2O$.

8. A process as claimed in any of claims 1 to 7, characterized in that the grinding time is from 4 to 26 hours.

9. A process as claimed in claim 8, characterized in that the grinding time is from 8 to 24 hours.

10. A process as claimed in any of claims 1 to 9, characterized in that the grinding step is a wet milling.

European Patent Office

**PARTIAL EUROPEAN SEARCH REPORT**
which under Rule 45 of the European Patent Convention
shall be considered, for the purposes of subsequent
proceedings, as the European search report

Application number

EP 88 30 1370

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE - A - 3 248 391 (TESLA) | | C 04 B 35/10 |
| | * Claims 1,6; page 4, paragraph 2; page 6, paragraph 3 * | 1-10 | C 01 F 7/30 |
| | -- | | C 01 F 7/32 |
| Y | US - A - 3 360 203 (E.J. SMOKE) | | C 01 F 7/44 |
| | * Claims 1-4; column 2, line 34 - column 3, line 13 * | 1-10 | |
| | -- | | |
| Y,P | EP - A - 0 224 118 (NORTON CO.) | | |
| | * Claims 1,4-6,8; page 2, line 50 - page 3, line 7 * | 1-10 | |
| | -- | | |
| A | US - A - 3 838 980 (B. GNYRA) | | |
| | * Claims 1-6 * | 1-10 | |
| | ------------------ | | |

**TECHNICAL FIELDS SEARCHED (Int. Cl.4)**

C 04 B
C 01 F

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely:

Claims searched incompletely:

Claims not searched:

Reason for the limitation of the search:

According to the description and especially to the examples it is assumed that claim 1 should read "...alpha-alumina... having no coarse particles larger than 3 microns"

The search has been completed on the above understanding

| Place of search | Date of completion of the search | Examiner |
|---|---|---|
| THE HAGUE | 26-05-1988 | LÜTHE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1505.1. 03.82